# FASCICULE DE BREVET EUROPEEN

(11) **EP 2 856 709 B1**
(45) Date de publication et mention de la délivrance du brevet: **18.01.2017**
(21) Numéro de dépôt: 13730293.1
(22) Date de dépôt: 29.05.2013
(51) Int. Cl.: H04L 12/58

(54) **PROCÉDÉ DE TRAITEMENT DE FLUX DE DONNÉES IMAP, SERVEURS DE COURRIELS ET PROGRAMMES D'ORDINATEUR METTANT EN OEUVRE DE TELS PROCÉDÉS**
VERFAHREN ZUR VERARBEITUNG VON IMAP-DATENSTRÖMEN, SOWIE E-MAIL-SERVER UND COMPUTERPROGRAMME ZUR ANWENDUNG DIESER VERFAHRENS
METHOD FOR PROCESSING IMAP DATA FLOWS, ELECTRONIC MAIL SERVERS AND COMPUTER PROGRAMS IMPLEMENTING SAID METHODS

(30) Priorité: 31.05.2012 FR 1255031
(43) Date de publication de la demande: 08.04.2015
(73) Titulaire: Streamwide, 75010 Paris (FR)
(72) Inventeur: THEMEREAU, Vincent, F-75005 Paris (FR)
(74) Mandataire: Cabinet Plasseraud
(86) Numéro de dépôt international: PCT/FR2013/051195
(87) Numéro de publication internationale: WO 2013/178944

(56) Documents cités:
- EP-A1- 1 953 646
- EP-A1- 2 299 634
- WO-A1-01/77842
- US-A1- 2001 042 100
- US-A1- 2003 061 288
- US-A1- 2005 027 781
- US-B1- 7 194 252

## Description

La présente invention est relative aux serveurs de courriels et aux procédés de traitement de flux de données IMAP échangés via un réseau internet entre un serveur de courriels et des clients distants employant respectivement des protocole IMAP propriétaires distincts, par exemple des terminaux mobiles reliés au réseau internet.

Plus particulièrement, l'invention se rapporte à un procédé de traitement d'au moins deux flux de données IMAP, les flux de données IMAP étant échangés via un réseau internet entre un serveur de courriels et au moins deux clients distants employant respectivement un premier et un second protocole IMAP propriétaires distincts, chaque flux de données IMAP correspondant respectivement à une connexion d'un client distant respectif à une boîte de courrier électronique.

Avec le développement et la diversification des terminaux électroniques, un utilisateur peut aujourd'hui être amené à consulter sa boîte de courriels (ou « courriers électroniques ») depuis un ordinateur, un terminal mobile, un téléphone portable, une tablette tactile ou n'importe quel autre dispositif capable de communiquer avec le réseau internet. Ces clients distants possèdent des capacités de calcul, de stockage et d'affichage variées et emploient des protocoles de communication multiples. Ils disposent en outre de connections au réseau internet dont la disponibilité et la bande passante peuvent être réduites ou fluctuantes. La communication des clients distants avec le serveur de courriel, la délivrance des courriels à l'utilisateur ainsi queleur bonne réception et présentation sur l'unité d'affichage du client distant sont donc fréquemment source d'incertitude.

Le document EP-2-144-409-B1 décrit un exemple de procédé permettant de fournir un message de courrier électronique en plusieurs parties à un terminal mobile pour s'adapter à la faible bande passante et aux capacités de stockages réduites de tels terminaux client.

Le document EP 1 953 646 A1 décrit un procédé de réception et de délivrance de courrier électronique permettant de réaliser une conversion de courriels entre un émetteur et un destinataire.

Le document EP 2 299 634 A1 décrit un procédé dans lequel les courriels sont convertis au moment de leur réception sur le serveur de messagerie en fonction d'instructions SIEVE prédéfinies par l'utilisateur et enregistrés sur le serveur au format originel et au format converti.

Les procédés des documents EP 1 953 646 A1 et EP 2 299 634 A1 ne permettent pas à un utilisateur d'accéder à sa boîte de messagerie depuis des terminaux clients différents en adaptant la communication IMAP au client distant pour assurer la bonne réception et présentation des courriels quel que soit le protocole IMAP utilisé par le client distant.

Le document US 2001/042100 A1 décrit un procédé d'accès à une boîte de messagerie électronique dans lequel on génère une interface web ou vocale d'accès à une messagerie électronique IMAP. Un tel procédé présente plusieurs inconvénients parmi lesquels le fait que les courriels ne puissent être consultés que lorsqu'un accès internet est disponible ou encore que l'adaptation du courriel au client ne puisse pas être automatiquement réalisée en fonction du protocole propriétaire utilisé par le client mais doivent être faite par l'utilisateur qui choisit de se connecter à l'un ou l'autre des serveurs web ou vocal.

La présente invention vient encore améliorer la situation.

A cet effet, selon l'invention, un procédé du genre en question est tel que défini par les revendications.

L'invention a également pour objet un serveur de courriels et un produit programme d'ordinateur tels que défini par les revendications.

De façon générale, certains de ces modes de réalisation présentent un ou plusieurs des avantages suivants. La communication IMAP peut ainsi être adaptée au client distant. Les informations de caractéristiques techniques du client distant peuvent être renseignées séparément et permettre une adaptation des courriels transférés au terminal client. Les performances du serveur de courriel sont améliorées, entre autre car il n'a pas besoin de stocker les courriels en mémoire. Il est possible grâce à ce procédé de transmettre au client des données variées sous forme de courriel, par exemple des messages vocaux ou visuels, des télécopies, des notifications d'événements comme des appels manqués. Ces données peuvent être enregistrées sur le serveur de stockage dans un format différent du format de courriel ce qui évite de devoir adapter le serveur de stockage à l'utilisation. Ces données peuvent être converties lors de la génération du courriel en un format adapté au client distant.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est un schéma synoptique illustrant un système pouvant employer un procédé de traitement d'au moins deux flux de données IMAP selon l'invention ;
- les figures 2a et 2b sont des schémas synoptiques illustrant un mode de réalisation d'un procédé de traitement d'au moins deux flux de données IMAP selon l'invention en détaillant les échanges entre un client distant et un serveur de courriel;
- la figure 3 est un schéma synoptique illustrant un mode de réalisation d'un procédé de traitement d'au moins deux flux de données IMAP selon l'invention en détaillant les échanges entre un serveur de courriel et un serveur de stockage;
- la figure 4 est un organigramme illustrant un mode de réalisation d'un procédé de traitement d'au moins deux flux de données IMAP selon l'invention ;
- la figure 5 est un organigramme illustrant un mode de réalisation d'une sous-étape d'un procédé de délivrance de courriel à la demande selon l'invention ;

Sur les différentes figures, les mêmes références désignent des éléments identiques ou similaires.

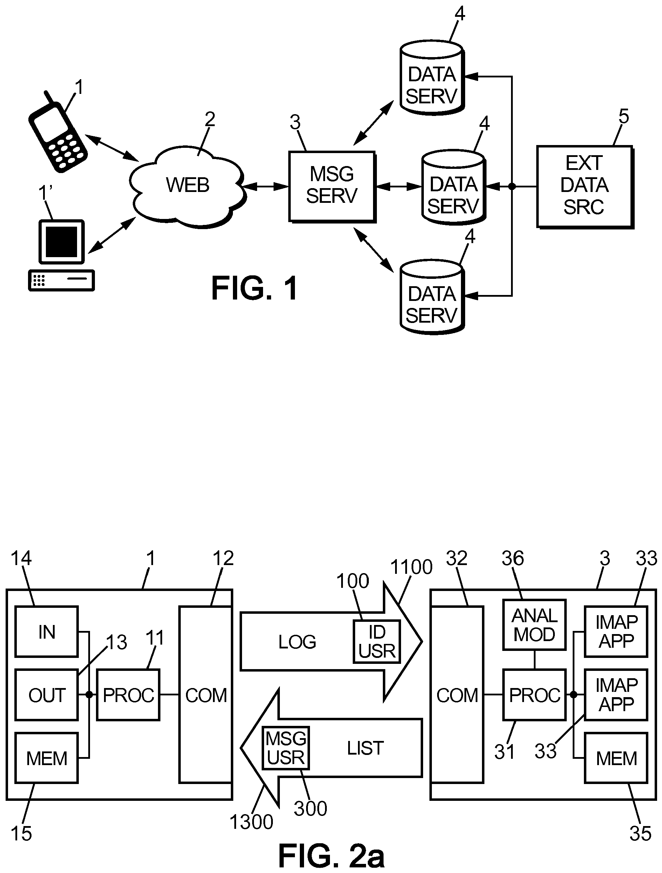

En se référant tout d'abord à la **figure 1**, un système peut comprendre un ou plusieurs clients distants 1, 1' reliés via un réseau internet 2 à un serveur de courriels 3, lui-même relié à au moins un serveur de stockage 4.

On utilisera indifféremment dans la suite de la description les termes « courriel », « message », « courrier électronique », « message électronique » ainsi que les termes dérivés de ces derniers.

A titre purement illustratif, deux clients distants 1 et 1' sont représentés sur la figure 1, mais n'importe quel nombre de clients distants peut être employé. Les clients distants peuvent être de types différents. À titre d'exemple, un premier client distant 1 illustré sur la figure 1 comporte un terminal mobile de type « smartphone », téléphone intelligent ou ordiphone, tandis qu'un deuxième client distant l'illustré sur la figure 1 peut comprendre un ordinateur de bureau.

Le ou les clients distants 1 sont connectés au serveur de courriel 3 via le réseau internet 2 et peuvent échanger des informations en utilisant des protocoles de communication sur le réseau internet connus comme TCP/IP acronymes anglo-saxon respectifs de « Transmission Control Protocol » et « Internet Protocole ».

Les clients distants 1 peuvent être connectés au réseau internet 2, directement ou par l'intermédiaire d'un routeur ou d'un pare-feu, par exemple dans le cas où ledit client distant 1 est constitué par un ordinateur de bureau.

Alternativement, les clients distants peuvent accéder au réseau internet 2 par l'intermédiaire d'un réseau étendu sans fil ou WWAN acronyme anglo-saxon de « Wireless Wide Area Network », également connu sous le nom de réseau cellulaire mobile ou réseau mobile terrestre, ou par l'intermédiaire d'un réseau local sans fil ou WLAN acronyme anglo-saxon de « Wireless Local Area Network ».

Ce réseau sans fil peut par exemple comprendre une pluralité d'antennes-relais de téléphonie mobile également appelées station de base et permettant chacune de communiquer avec les terminaux mobiles ou clients distants présents sur une zone géographique délimitée. Les antennes relais peuvent être reliées, par l'intermédiaire d'équipements de routage, à une passerelle d'interconnexion permettant l'échange de données avec le réseau internet. Le réseau formé par ces équipements peut être de l'un des types suivants : Mobitex Radio Network, DataTAC, GSM (« Global System for Mobile Communication »), GPRS (« General Packet Radio System », TDMA (« Time Division Multiple Access »), CDMA (« Code Division Multiple Access »), CDPD (« Cellular Digital Packet Data »), iDEN (« integrated Digital Enhanced Network »), EvDO (« Evolution-Data Optimized ») CDMA2000, EDGE (« Enhanced Data rates for GSM Evolution »), UMTS (« Universal Mobile Télécommunication Systems »), HSPDA (« High-Speed Downlink Packet Access »), WiMax (« Worldwide Interoperability for Microwave Access ») ou d'un autre type.

En variante, le client distant 1 peut comprendre un ordinateur de bureau, un ordinateur portable, une tablette tactile ou n'importe quel autre dispositif électronique dépourvu de possibilité de connexion audit réseau sans fil. Le client distant 1 peut alors être relié au réseau sans fil par l'intermédiaire d'un dispositif de connexion externe, par exemple relié au client distant 1 par l'intermédiaire de l'une ou d'une combinaison d'une connexion Ethernet, d'une interface USB acronyme anglo-saxon de « Universal Serial Bus », d'une interface FireWire (également connu sous le nom d'interface IEEE 1394), ou d'une autre interface d'échange de données en série, via les ports respectifs ou des interfaces du client distant.

Le réseau internet 2 peut comprendre un réseau privé local, un réseau métropolitain ou MAN, acronyme anglo-saxon de « Metropolitan Area Network », un réseau étendu ou WAN, acronyme anglo-saxon de « Wide Area Network », Internet ou des combinaisons de ceux-ci, combinaisons qui peuvent par exemple comprendre des réseaux privés virtuels.

Les clients distants 1 peuvent employer des protocoles IMAP propriétaires.

En particulier, Les clients distants 1 peuvent employer des protocoles IMAP propriétaires distincts.

Par exemple un client distant 1 peut employer un protocole IMAP propriétaire tel que le protocole « Apple Visual Voicemail Protocol Spécification » v1.1 march 5, 2008 ou le protocole « OMTP Visual Voice Mail Interface Spécification » v1.3 June 11th, 2010 ou d'autres protocoles.

Les protocoles IMAP propriétaires distincts sont distincts car ils comportent des commandes, des paramètres et/ou des identifiants distincts.

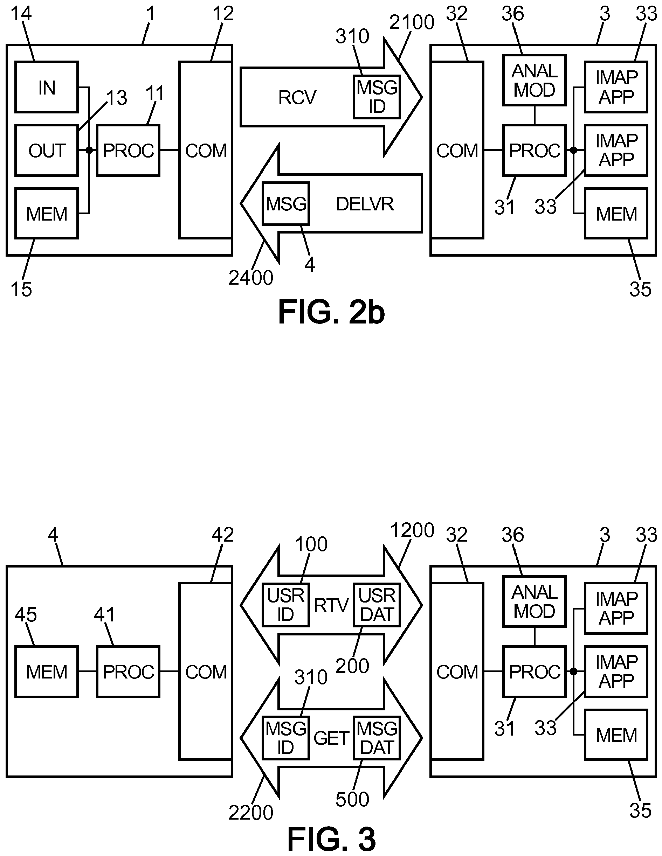

En se référant à présent également aux **figures 2a** **et** **2b****,** un client distant 1 peut comprendre un processeur 11 qui commande le fonctionnement d'ensemble du client distant 1.

Le processeur 11 peut être constitué en pratique d'un ou plusieurs microprocesseurs programmés.

Le processeur 11 peut interagir avec un module de communication 12 effectuant les sous-étapes de communication.

Le processeur 11 peut également interagir avec des modules périphériques supplémentaires qui peuvent comprendre, de façon non limitative et optionnelle, des périphériques de sortie 13, des périphériques d'entrée 14 et un module de stockage 15. Les modules périphériques supplémentaires ne sont pas limités à la liste précédente.

Les périphériques de sortie 13 peuvent comporter un module d'affichage, par exemple, un affichage à cristaux liquides (LCD) ou un moniteur, par exemple un écran cathodique ou numérique.

Ils peuvent également comprendre un module de sortie audio, par exemple un haut-parleur ou un casque audio.

Les périphériques d'entrée 14 peuvent comprendre, par exemple, un clavier, une souris, un appareil de navigation comme une ou plusieurs molettes de défilement cliquable, une boule de commande, un pavé tactile, un écran tactile, un microphone audio ou tout autre dispositif permettant à un utilisateur d'envoyer des commandes ou des informations au client distant.

Le clavier peut être un clavier alphanumérique complet, ou peut être un clavier alphanumérique réduit ou simplifiée tel par exemple qu'un clavier de téléphone.

Dans certains modes de réalisation, un périphérique d'entrée 14 et un module d'affichage 13 peuvent être implémentés en utilisant un écran tactile comportant un dispositif d'affichage dont la surface d'entrée est sensible au toucher.

Le module de stockage 15 du client distant 1 peut comprendre, par exemple, une ou plusieurs mémoires à accès direct (RAM), mémoire morte (ROM), un disque dur (HDD), ou n'importe quel autre support de stockage de données numérique.

Le module de stockage 15 peut être utilisé pour stocker des données locales sur le client distant 1 tels que des courriels ou des pièces jointes de courriels.

Dans certains modes de réalisation, le module de stockage 15 est constitué par une mémoire de stockage ayant un emplacement de mémoire réservée pour le stockage des courriels ou des pièces attachées de courriels.

A titre d'illustration, le module de stockage 15 est représenté comme un bloc unique sur la figure 2a mais il sera apprécié que le module de stockage 15 peut comporter une pluralité de supports de mémoire comprenant des supports de mémoire parmi les supports détaillés ci-avant, par exemple ROM, RAM et un disque dur.

Le module de stockage 15 du client distant 1 peut également stocker d'autres données, par exemple des données de services comprenant les informations requises par le client distant 1 pour établir et contrôler la communication avec le réseau internet 2 et le serveur de courriels 3, par exemple, des données de services réseau.

Le module de stockage 15 du client distant 1 peut également stocker des données utilisateur d'applications logicielles tels que des courriels, un carnet d'adresses et d'informations de contact, un agenda, des documents texte, des fichiers image, son ou vidéo, ou toute autre information de l'utilisateur usuellement mémorisée dans le client distant 1.

Les données stockées dans le module de stockage 15 du client distant 1 peuvent être organisées, au moins en partie, en un certain nombre de bases de données contenant par exemple chacune des données du même type de données ou des données associées à une même application logicielle du client distant 1.

Le processeur 11 exécute usuellement des instructions d'un programme également appelé logiciel et enregistré dans le module de stockage 15 et peut par exemple exécuter des modules logiciels stockés dans le module de stockage 15.

Ces modules logiciels peuvent comprendre un programme central ou système d'exploitation et des applications logicielles. Les modules logiciels ou des parties de ceux-ci appelé processus peuvent être temporairement chargé dans une mémoire volatile, par exemple une mémoire à accès direct (RAM) du module de stockage 15.

La mémoire à accès direct est également utilisée pour stocker des données variables d'exécution ou d'autres types de données ou d'information utilisées temporairement au cours de l'exécution d'une application ou d'un module logiciel.

Les applications logicielles peuvent comprendre une variété d'applications dont par exemple, des applications de communication telles qu'une application de messagerie électronique, une application de messagerie vocale, une application de communication de téléphonie, une application de cartographie, une application d'agenda, une application de carnet d'adresse et une application de lecteur multimédia.

On remarquera que le client distant 1 peut comprendre des modules supplémentaires qui ne sont pas représentés sur la figure 2a mais sont bien connus de l'homme de l'art, par exemple, une alimentation qui peut comprendre une interface avec un réseau électrique urbain ou une ou plusieurs batteries rechargeables.

L'alimentation fournit usuellement de l'énergie électrique à au moins une partie des circuits électriques du client distant 1.

En se référant en particulier aux **figures 2a****,** **2b et 3****,** un serveur de courriels 3 va maintenant être décrit plus en détail.

Le serveur de courriels 3 peut être mis en oeuvre en employant n'importe quel ordinateur ou serveur connu et peut, par exemple, être réalisé en utilisant un ou plusieurs ordinateurs et/ou serveurs exécutant une ou plusieurs applications logicielles réalisant les fonctions décrites ci-après.

Le serveur de courriels 3 est configuré pour mettre en oeuvre un certain nombre de modules comprenant, de façon non-limitative et optionnelle, un module de contrôle 31, des modules de communication 32, un module d'analyse 36, des modules d'applications IMAP propriétaires et de génération de courriel 33 et des modules de stockage 35.

Dans un mode de réalisation, le serveur de courriels 3 peut par exemple comporter un ou plusieurs microprocesseurs qui exécutent des instructions d'un ou plusieurs programmes également appelés applications logicielles de façon à mettre en oeuvre lesdits modules.

Lesdits programmes ou applications logicielles peuvent par exemple être stockés dans une mémoire persistante ou morte du serveur de courriels 3.

Le module de contrôle 31 peut contrôler l'exécution des composants et des modules du serveur de courriels 3, les démarrer, les arrêter et les redémarrer si besoin.

Les modules de communication 32 se connectent avec les clients distants 1 et les serveurs de stockage 4.

Les modules de communications 32 peuvent être adaptés pour communiquer avec les clients distants 1 et les serveurs de stockage 4 via un réseau privé local, un réseau métropolitain (MAN), un réseau étendu (WAN), Internet ou via des combinaisons de ceux-ci, combinaisons qui peuvent par exemple comprendre des réseaux privés virtuels.

Le module de contrôle 31, les modules de communication 32, le module d'analyse 36, les modules d'applications IMAP propriétaires et de génération de courriel 33 et les modules de stockage 35 peuvent par exemple chacun être mis en oeuvre grâce à des applications logicielles autonomes, ou bien combinés dans une ou plusieurs applications logicielles, ou comme des processus d'une autre application logicielle.

Dans certains modes de réalisation, les fonctions exercées par chacun des modules identifiés ci-dessus peuvent être réalisées dans une pluralité de modules indépendants plutôt que dans un module unique et intégré, et un ou plusieurs de ces modules peuvent être mis en oeuvre en tant que parties d'autres applications logicielles.

Un client distant 1 peut par exemple contrôler sa boîte de courrier électronique et échanger des courriels avec le serveur de courriel 3 au moyen d'un protocole de consultation, de récupération et/ou d'envoi de courriers électroniques tel que le protocole IMAP, acronyme anglo-saxon de « Internet message access protocol » ou un protocole dérivé.

Les clients distants 1 échangent via le réseau internet un flux de données IMAP avec le serveur de courriel 3.

Ce flux de données IMAP comprend un ensemble d'instructions et d'informations échangées entre un client distant 1, 1' et le serveur de courriel 3 selon un protocole IMAP, par exemple un protocole IMAP propriétaire tel que mentionné ci-avant pour les clients distants 1.

En se référant à présent en particulier à la **figure 3****,** un serveur de stockage 4 va maintenant être décrit plus en détail.

De façon similaire au serveur de courriels 3, Le serveur de stockage 4 peut être mis en oeuvre en employant n'importe quel ordinateur ou serveur connu et peut, par exemple, être réalisé en utilisant un ou plusieurs ordinateurs et/ou serveurs et exécutant une ou plusieurs applications logicielles réalisant les fonctions décrites ci-après.

Le serveur de stockage 4 est configuré pour mettre en oeuvre un certain nombre de modules comprenant, de façon non-limitative et optionnelle, un module de contrôle 41, des modules de communication 42 et des modules de stockage 45.

Dans un mode de réalisation, le serveur de stockage 4 peut par exemple comporter un ou plusieurs microprocesseurs qui exécutent des instructions d'un ou plusieurs programmes également appelés applications logicielles de façon à mettre en oeuvre lesdits modules.

Lesdits programmes ou applications logicielles peuvent par exemple être stockés dans une mémoire persistante ou morte du serveur stockage 4.

Le module de contrôle 41 peut contrôler l'exécution des composants et les modules du serveur de stockage 4, les démarrer, les arrêter et les redémarrer si besoin.

Les modules de communication 42 peuvent se connecter et échanger des données avec le serveur de courriel 3 et des sources de données externes 5, par exemple via un réseau étendu sans fil (WWAN) également connu sous le nom de réseau cellulaire mobile ou réseau mobile terrestre, un réseau local sans fil (WLAN), un réseau privé local, un réseau métropolitain (MAN), un réseau étendu (WAN), Internet ou des combinaisons de ceux-ci, combinaisons qui peuvent en outre comprendre des réseaux privés virtuels.

Les sources de données externes 5 peuvent comprendre une variété de terminaux sources de types différents selon les données stockées dans le serveur de stockage 4.

À titre purement illustratif, un serveur de stockage 4 d'un système de messagerie vocale, adapté pour stocker des messages vocaux, peut avoir comme sources de données externes 5, des téléphones se connectant audit serveur de stockage via un réseau téléphonique.

Le serveur de courriel 3 se connecte aux modules de communication 42 d'un serveur de stockage 4 à l'aide d'un service web, par exemple en employant un protocole parmi OSA, SOAP, REST, XML-RPC ou une combinaison de ces protocoles.

Tout protocole d'échange de données adapté peut être employé pour la communication entre le serveur de courriel 3 et les serveurs de stockage 4.

Le module de contrôle 41, les modules de communication 42 et les modules de stockage 45 peuvent par exemple chacun être mis en oeuvre grâce à des applications logicielles autonomes, ou bien combinés dans une ou plusieurs applications logicielles, ou comme des processus d'une autre application logicielle.

Dans certains modes de réalisation, les fonctions exercées par chacun des modules identifiés ci-dessus peuvent être réalisées dans une pluralité de modules indépendants plutôt que dans un module unique et intégré, et un ou plusieurs de ces modules peuvent être mis en oeuvre en tant que parties d'autres applications logicielles.

De façon avantageuse, le ou les serveurs de stockage 4 peuvent être accessibles par le client distant 1 via le réseau internet 2 uniquement par l'intermédiaire du serveur de courriel 3.

Ainsi un utilisateur d'un client distant 1 ne peut pas accéder directement aux serveurs de stockage 4 via le réseau internet 2.

De cette façon, les serveurs de stockage 4 peuvent être protégés des risques d'intrusion.

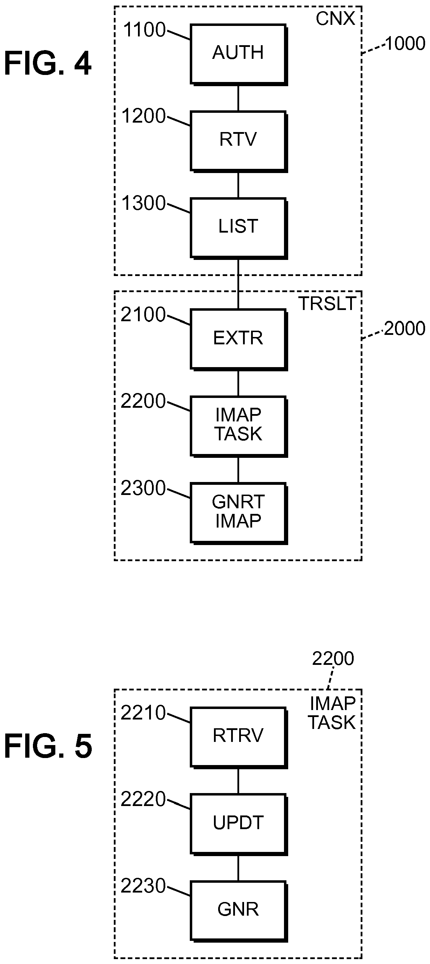

En se référant à présent également à la **figure 4**, un procédé traitement de flux IMAP va maintenant être décrit plus en détail.

Ce procédé comporte une étape de traduction 2000 pouvant être précédée d'une étape de connexion 1000.

En se référant en particulier aux figures 2a et 4, l'étape de connexion 1000 peut comporter une première sous-étape d'authentification 1100 au cours de laquelle le client distant 1 s'identifie auprès du serveur de courriels 3.

La sous-étape d'authentification 1100 peut par exemple comprendre la transmission au serveur de courriel 3 d'identifiants utilisateur 100 pouvant comporter par exemple un nom d'utilisateur 110 ainsi qu'un mot de passe 120.

Dans certains modes de réalisation, par exemple lorsque le réseau 2 est un réseau non sécurisé comme Internet, les identifiants utilisateur 100 peuvent avantageusement être communiqués sous forme cryptée.

Les communications peuvent être sécurisées par l'utilisation d'un protocole de transfert sécurisé, par exemple le protocole Transport Layer Security (TLS).

Le client distant 1 peut alors requérir, préalablement à l'envoi des identifiants utilisateur 100, l'ouverture d'une session sécurisée, par exemple une session TLS.

Les communications peuvent alors être cryptées en utilisant une clé de chiffrement symétrique, par exemple en au moyen d'algorithmes de type AES, acronyme anglo-saxon de « Advanced Encryption Standard » ou de type Triple DES, pour « Triple Data Encryption Standard ».

Des clés de chiffrement privées peuvent être générées dans un environnement protégé et utilisées pour le chiffrement et le déchiffrement des données.

Dans un mode de réalisation d'un procédé selon l'invention comportant une telle session sécurisée TLS, le client distant 1 peut, avant de requérir l'ouverture d'une session TLS, demander au serveur de courriel 3 de lister ses capacités, afin de vérifier que le serveur de courriel 3 à la capacité de communiquer par session sécurisée TLS.

La sous-étape d'authentification 1100 peut être mise-en-oeuvre en employant un protocole de consultation, de récupération et/ou d'envoi de courriers électroniques tel que le protocole IMAP, acronyme anglo-saxon de « Internet message access protocol ».

Une fois que le serveur de courriel 3 a obtenu les identifiants utilisateur 100, il peut les comparer avec des identifiants utilisateur de référence 130 stockés en mémoire. Les identifiants de référence 130 peuvent également être stockés sur un serveur distant, par exemple un serveur de stockage 4.

Si les identifiants utilisateur 100 sont identiques aux identifiants de référence 130, le client distant 1 peut être identifié.

Au cours d'une deuxième sous-étape 1200, le serveur de courriel 3 peut obtenir des informations de caractéristiques techniques 200 depuis un serveur de stockage 4. Ces informations de caractéristiques techniques 200 sont avantageusement associées aux identifiants utilisateur 100 du client distant 1, par exemple au moyen d'une base de données 299 d'un serveur de stockage 4.

Les informations de caractéristiques techniques 200 peuvent par exemple comprendre des informations de matériel 210 relatives au matériel électronique constituant le client distant 1 et des informations logiciel 220 relatives aux applications logicielles installés sur ledit client distant 1 et/ou au système d'exploitation dudit client distant 1.

Elles peuvent également comporter des informations d'utilisateur 230, relatives à l'utilisateur du client distant 1, par exemple la langue dans laquelle le message celui souhaite lire les messages.

Elles peuvent enfin comporter des informations paramétrées par l'utilisateur du client distant 240 et indiquant par exemple la façon dont ce dernier souhaite accéder aux courriels par l'intermédiaire du client distant 1, par exemple avec ou sans l'affichage des images.

Au cours d'une troisième sous-étape 1300 optionnelle, le client distant 1 peut obtenir une liste de messages 300 contenus dans la boîte de courrier électronique ou dans un répertoire de sa boîte de courrier électronique, par exemple le répertoire correspondant à la boîte de réception.

Le client distant 1 peut envoyer au serveur de courriel 3 une requête, par exemple pour obtenir une liste de messages, selon un protocole de consultation, de récupération et/ou d'envoi de courriers électroniques tel que le protocole IMAP, acronyme anglo-saxon de « Internet message access protocol ».

Cette liste de messages 300 peut contenir un ou plusieurs identifiants de courriels 310 associés chacun à un courriel 400 de la boîte de courrier électronique.

Le serveur de courriel 3 peut utiliser les informations de caractéristiques techniques 200 lors de la génération de la liste de messages 300.

A titre d'illustration, le serveur de courriels 3 peut alors sélectionner uniquement les messages susceptibles d'être lus par le client distant 1 pour les inclure dans la liste de messages 300.

L'étape de connexion 1000 peut être réalisée au moins en partie par le module d'analyse 36.

Suite à l'étape de connexion 1000, l'étape de traduction 2000 consiste, de façon générale et sans être limitatif, à traduire et exécuter les instructions comprises dans le flux de données IMAP. Cette étape peut également comprendre d'autres sous-étapes et va maintenant être détaillée plus avant.

L'étape de traduction 2000 comporte une première sous-étape 2100, réalisée par le module d'analyse 36, et consistant à extraire d'un flux de données IMAP, des données de logique propriétaire.

Puis, au cours d'une seconde sous-étape 2200, des tâches relatives aux données de protocole propriétaire extraites sont exécutées par un module d'application IMAP propriétaire.

Les données de logique propriétaire sont associées à chaque protocole IMAP propriétaire.

Elles sont définies de façon à traduire les instructions de chaque protocole IMAP propriétaire sous forme d'instructions exécutables par les modules d'application IMAP propriétaire.

Le module d'application IMAP propriétaire est sélectionné parmi plusieurs modules d'application IMAP propriétaire en fonction des informations de caractéristiques techniques 200 obtenues lors de l'étape de connexion 1000.

Ainsi par exemple un premier module d'application IMAP propriétaire peut être adapté pour exécuter des instructions d'un premier protocole IMAP propriétaire, par exemple le protocole « Apple Visual Voicemail Protocol Spécification » v1.1 march 5, 2008.

Un second module d'application IMAP propriétaire peut être adapté pour exécuter des instructions d'un second protocole IMAP propriétaire, par exemple le protocole « OMTP Visual Voice Mail Interface Spécification » v1.3 June 11th, 2010.

Au cours de la sous-étape 2200, le module d'application IMAP propriétaire peut ainsi générer des données de réponse de protocole propriétaire, par exemple tel qu'il va être décrit plus avant en relation avec la génération d'un courriel à la demande.

Enfin, l'étape de traduction 2000 comporte une dernière sous-étape 2300, réalisée au moins en partie par le module d'analyse 36, qui consiste à générer un flux de données IMAP de retour à partir des données de réponse de protocole propriétaire.

Le procédé ci-dessus peut par exemple être employé lors de la délivrance à la demande d'un courriel qui consiste, de façon générale et sans être limitatif, pour le serveur de courriel 3 à délivrer à un client distant 1 un courriel 400 demandé par ce dernier.

A cette fin, la sous-étape consistant à extraire d'un flux de données IMAP, des données de protocole propriétaire peut comprendre l'extraction d'une demande de délivrance d'un courriel, ladite demande comportant un identifiant de courriel 310 émis par un client distant 1.

Cet identifiant de courriel 310 peut par exemple comporter un ensemble de caractères alphanumériques ou un code identifiant le courriel 400 demandé par le client distant 1.

Cet identifiant de courriel 310 peut être modifié dans le temps par le serveur de courriel 3, par exemple lorsque le courriel 400 est déplacé d'un répertoire à un autre de la boîte de courrier électronique, mais identifie à un instant donné le courriel 400 demandé par le client distant 1.

En se référant en outre à la figure 5, la sous-étape 2200, consistant à exécuter des tâches relatives aux données de protocole propriétaire extraites peut comporter plusieurs opération réalisées par un module d'application IMAP propriétaire du serveur de courriel 3.

Au cours d'une première opération 2210 de récupération, le serveur de courriel 3 récupère des données de génération de courriel 500 depuis un ou plusieurs serveurs de stockage 4.

Les données de génération de courriel 500 peuvent avantageusement être associées à l'identifiant de courriel 310, par exemple au moyen d'une base de données 599 du serveur de stockage 4.

Les données de génération de courriel 500 peuvent également être associées à l'identifiant de client distant 310, par exemple au moyen d'une base de données 598 d'un serveur de stockage 4.

Les données de génération de courriel 500 peuvent comporter des données à encapsuler 510, par exemple un message vocal ou visuel, une image ou une vidéo, un enregistrement sonore, une télécopie ou un document numérisé, une notification d'évènement, par exemple une notification d'un appel manqué, et/ou toute autre données destinées à être encapsulées dans le courriel 400 ou liées au courriel 400, par exemple sous la forme d'une pièce jointe 410 au moyen du protocole d'échange MIME, acronyme anglo-saxon de « Multipurpose Internet Mail Extensions » ou du protocole S/MIME pour « Secure / Multipurpose Internet Mail Extensions ».

Les données de génération de courriel 500 peuvent également comporter des attributs de message 520 définissant des paramètres de génération du courriel 400.

Les attributs de message 520 peuvent définir la langue dans laquelle le message doit être généré, des paramètres liés à l'objet du message, au corps du message, à l'émetteur du message.

Les attributs de message 520 peuvent définir des paramètres de génération des entêtes, également appelées « headers », du courriel 420.

La sous-étape 2200 d'exécution de tâches relatives aux données de protocole propriétaire peut également comporter une opération 2220 de mise à jour sur le serveur de stockage des données de génération de courriel 500.

Cette mise-à-jour peut consister à mettre à jour le statut des données de génération de courriel 500, par exemple dans une base de données, à déplacer les données de génération de courriel 500 dans un autre répertoire d'un module de stockage 45 du serveur de stockage 4 ou à modifier les données de génération de courriel 500 sur le serveur de stockage 4.

À titre purement illustratif, dans un mode de réalisation où le serveur de stockage 4 fait partie d'un système de messagerie vocale et est adapté pour stocker des messages vocaux, les données de génération de courriel 500 peuvent comprendre des messages vocaux et la mise-à-jour desdites données de génération de courriel 500 peut comporter l'archivage desdits messages vocaux.

Une troisième opération de génération 2230peut ensuite comporter la génération par le module d'application IMAP propriétaire du courriel 400 associé à l'identifiant de courriel 310.

L'opération de génération 2230 est avantageusement réalisée en fonction des informations de caractéristiques techniques 200 et/ou des données de génération de courriel 500.

L'opération de génération 2230 comporte la génération des entêtes 420 du courriel 400, par exemple les entêtes spécifiant l'objet, le destinataire, l'émetteur, la date, l'adresse de réponse, un identifiant secondaire du message, la priorité du courriel, des variables ou des identifiants de versions MIME ou HTTP, le type de contenu, un identifiant de contenu, le type d'encodage, des variables ou des identifiants de version d'application logicielles et/ou tout autre champ de courriel utile.

L'opération de génération 2230 peut également comprendre la génération du corps 430 du courriel 400.

La génération du corps 430 du courriel peut comprendre la génération d'un texte de message, d'images, de vidéo, d'animations et/ou de sons à inclure dans le corps du courriel 430.

Le corps 430 du courriel peut par exemple être généré dans une langue spécifiée par les informations de caractéristiques techniques 200 et/ou les attributs de message 520.

À titre d'illustration non-limitative, les informations logicielles 220, relatives aux applications logicielles installées sur ledit client distant 1, peuvent indiquer que le client distant 1 dispose d'une application logicielle spécifique pour la lecture des messages comportant une pièce jointe munie d'un message vocal.

Le courriel 400 pourra alors être généré de façon à répondre aux spécifications de cette application logicielle, par exemple au moyen d'entêtes 420 ou d'un corps de message 430 adaptés.

Dans un autre mode de réalisation et toujours à titre d'illustration non-limitative, les informations de caractéristiques techniques 200 peuvent indiquer que le client distant 1 accède aux messages au moyen d'un client de messagerie connu comme par exemple Lotus Notes d'IBM, Mail d'Apple, Microsoft Outlook ou Mozilla Thunderbird.

Le courriel 400 pourra alors être généré de façon à être lisible et compréhensible par un utilisateur humain, par exemple au moyen d'entêtes 420 et/ou d'un corps de message 430 adaptés.

L'opération de génération 2230 peut en outre comprendre la génération ou l'adaptation d'une ou de plusieurs pièces jointes 410 au message.

Pour fournir à nouveau un exemple à titre d'illustration non-limitative permettant de mieux comprendre les avantages de l'invention, les informations de caractéristiques techniques 200 peuvent indiquer un ou plusieurs formats de pièce jointe 410 que le client distant 1 est capable de présenter à l'utilisateur, par exemple dans le cas d'un message vocal, un ou plusieurs formats de données audio que le client distant 1 est capable de diffuser par périphérique sortie 13 tel qu'un haut-parleur.

L'opération de génération 2230 peut alors comprendre l'adaptation par transcodage de données à encapsuler 510 de façon à générer une pièce jointe 410 dans un format lisible par le client distant 1.

Enfin, L'opération de génération 2230 peut comporter la concaténation des entêtes 420, corps de message 430 et pièces jointes 410 générées afin de former le courriel 400.

Enfin, la sous-étape 2300 consistant à générer un flux de données IMAP de retour peut comprendre la transmission du courriel 400 généré depuis le serveur de courriel 3 jusqu'au client distant 1.

Cette transmission peut comporter la génération d'un flux de donnée IMAP de retour comportant le courriel généré lors de la sous-étape précédent 2200 ainsi que la transmission dudit flux de données IMAP de retour au client distant 1.

Cette transmission peut se faire via le réseau internet 2 et par exemple selon un protocole de consultation, de récupération et/ou d'envoi de courriers électroniques tel que le protocole IMAP, acronyme anglo-saxon de « Internet message access protocol ».

De façon générale, les communications entre le client distant 1 et le serveur de courriels 3 peuvent être réalisées selon un protocole de consultation, de récupération et/ou d'envoi de courriers électroniques tel que le protocole IMAP, acronyme anglo-saxon de « Internet message access protocol ».

Les modes de réalisation de l'invention présentés ci-dessus sont décrits uniquement à titre d'exemples.

L'homme de l'art peut y effectuer des modifications et des combinaisons de modes particuliers de réalisation sans quitter le champ d'application de la présente invention.

En particulier, les caractéristiques d'un ou de plusieurs des modes de réalisation décrits ci-dessus peuvent être choisis et combinés pour créer des variantes de réalisation comprenant des sous-ensembles de caractéristiques qui ne sont pas explicitement décrits ci-dessus.

En outre, les caractéristiques d'un ou de plusieurs des modes de réalisation décrits ci-dessus peuvent être sélectionnées et combinées pour créer des variantes de réalisation comprenant des combinaisons de caractéristiques qui sont pas explicitement décrites ci-dessus.

L'homme de l'art, après examen de l'invention dans son ensemble, verrait à l'évidence les caractéristiques adaptées à de telles combinaisons et sous-combinaisons.

L'objet de l'invention doit également être entendu comme couvrant tous les changements appropriés en matière de technologie, en particulier les évolutions des protocoles informatiques mentionnés ci-avant.

## Revendications

1. Procédé de traitement d'au moins deux flux de données IMAP, les flux de données IMAP étant échangés via un réseau internet entre un serveur de courriels (3) et au moins deux clients distants (1, 1') employant respectivement un premier et un second protocole IMAP propriétaires distincts, chaque flux de données IMAP correspondant respectivement à une connexion d'un client distant respectif à une boîte de courrier électronique, le procédé étant **caractérisé en ce qu'**il comprend une étape de traduction (2000) comportant :
une première sous-étape (2100) réalisée par un module d'analyse (36), consistant à extraire d'un flux de données IMAP, des données de protocole propriétaire et comprenant l'extraction d'une demande de délivrance d'un courriel identifié par un identifiant de courriel (310),
une seconde sous-étape (2200) consistant à exécuter au moins une tâche relative aux données de protocole propriétaire extraites par un module d'application IMAP propriétaire (33) échangeant des données avec au moins un serveur de stockage (4, 5) via un réseau pour obtenir des données de réponses de protocole propriétaire, ladite sous-étape comportant les opérations de :
obtenir (2210) depuis au moins un serveur de stockage (4, 5) des données à encapsuler et des données d'attributs de messages (500), lesdites données étant associées à l'identifiant de courriel (310), et
générer (2230) le courriel à partir des données à encapsuler et des données d'attributs de messages, et
une troisième sous-étape (2300) réalisée par le module d'analyse (36) consistant à générer un flux de données IMAP de retour à partir des données de réponse de protocole propriétaire et comprenant la transmission dudit courriel au client distant (1, 1'),
ledit module d'application IMAP propriétaire étant choisi parmi un premier et un second module d'application IMAP propriétaire (33), le premier module d'application IMAP propriétaire étant adapté pour exécuter des tâches relatives au premier protocole IMAP propriétaire, le second module d'application IMAP propriétaire étant adapté pour exécuter des tâches relatives au second protocole IMAP propriétaire.

2. Procédé selon la revendication 1, dans lequel le module d'application IMAP propriétaire (33) est choisi parmi le premier et le second module d'application IMAP propriétaire en fonction d'informations de caractéristiques techniques (200) associées au client distant (1, 1').

3. Procédé selon la revendication 1 ou 2, dans lequel le module d'analyse (36) échange des données avec au moins un serveur de stockage (4) via un réseau, le procédé comprenant en outre une étape d'authentification (100) réalisée avant l'étape de traduction et comportant
une sous-étape d'identification (1100) du client distant par le serveur de courriels, et
une sous-étape de récupération (1200) sur le serveur de courriels (3), depuis un serveur de stockage (4), d'informations de caractéristiques techniques (200) associées au client distant.

4. Procédé selon l'une des revendications 1 à 3, **caractérisé en ce que** l'opération d'obtenir (2200) depuis au moins un serveur de stockage (4) des données à encapsuler (500) et des données d'attributs de messages comprend la mise à jour (2220) desdites données sur le serveur de stockage (4).

5. Procédé selon l'une quelconque des revendications 1 à 4, **caractérisé en ce que** l'opération de générer le courriel (2300) et/ou l'opération d'obtenir (2200) depuis au moins un serveur de stockage (4) des données à encapsuler et des données d'attributs de messages, est réalisée en fonction des informations de caractéristiques techniques (200).

6. Procédé selon l'une quelconque des revendications 1 à 5, **caractérisé en ce que** les données à encapsuler (500) comportent des données choisies dans une liste comprenant un message vocal, un message vocal visuel, une image, une vidéo, un enregistrement sonore, une télécopie, un document numérisé, une notification d'évènement.

7. Procédé selon l'une quelconque des revendications 3 à 6, **caractérisé en ce que** le serveur de stockage (4) est accessible, par le client distant (1, 1') et via le réseau internet (2), uniquement par l'intermédiaire du serveur de courriel (3).

8. Serveur de courriels (3) pour traiter au moins deux flux de données IMAP, les flux de données IMAP étant échangés via un réseau internet (2) avec au moins deux clients distants (1, 1') employant respectivement un premier et un second protocole IMAP propriétaires distincts, chaque flux de données IMAP correspondant respectivement à une connexion d'un client distant respectif à une boîte de courrier électronique, le serveur de courriels étant **caractérisé en ce qu'**il comprend :
un module d'analyse (36) pour réaliser une sous-étape consistant à extraire (2100) d'un flux de données IMAP, des données de protocole propriétaire et comprenant l'extraction d'une demande de délivrance d'un courriel identifié par un identifiant de courriel, et une sous-étape consistant à générer (2300) un flux de données IMAP de retour à partir des données de réponse de protocole propriétaire et comprenant la transmission dudit courriel au client distant (1, 1'), et
au moins un premier et un second module d'application IMAP propriétaire (33), le premier module d'application IMAP propriétaire étant adapté pour exécuter des tâches relatives au premier protocole IMAP propriétaire, le second module d'application IMAP propriétaire étant adapté pour exécuter des tâches relatives au second protocole IMAP propriétaire,
lesdits modules d'application IMAP propriétaire (33) échangeant des données avec au moins un serveur de stockage (4) via un réseau et étant adaptés pour réaliser une sous-étape consistant à exécuter au moins une tâche relative aux données de protocole propriétaire extraites (2200) pour obtenir des données de réponses de protocole propriétaire, ladite sous-étape comportant les opérations de :
obtenir (2210) depuis au moins un serveur de stockage des données à encapsuler et des données d'attributs de messages, lesdites données étant associées à l'identifiant de courriel, et
générer (2230) le courriel à partir des données à encapsuler et des données d'attributs de messages.

9. Produit programme d'ordinateur comprenant des instructions aptes à mettre en oeuvre, lors d'une exécution de ce programme par un processeur d'un serveur de courriels les étapes d'un procédé selon l'une quelconque des revendications 1 à 7.

## Patentansprüche

1. Verfahren zur Verarbeitung von mindestens zwei IMAP-Datenströmen, wobei die IMAP-Datenströme über ein Internet-Netz zwischen einem E-Mail-Server (3) und mindestens zwei Remoteclients (1, 1') ausgetauscht werden, die jeweils ein erstes und ein zweites anderes proprietäres IMAP-Protokoll verwenden, wobei jeder IMAP-Datenstrom jeweils einer Verbindung eines jeweiligen Remoteclient zu einer elektronischen Mailbox entspricht, wobei das Verfahren **dadurch gekennzeichnet ist, dass** es einen Übersetzungsschritt (2000) umfasst, aufweisend:
einen ersten Teilschritt (2100), der durch ein Analysemodul (36) durchgeführt wird und darin besteht, Daten des proprietären Protokolls aus einem IMAP-Datenstrom zu extrahieren, und die Extraktion einer Anforderung der Zustellung einer durch eine E-Mail-ID (310) identifizierten E-Mail umfasst,
einen zweiten Teilschritt (2200), der darin besteht, mindestens eine Aufgabe bezüglich der Daten des proprietären Protokolls auszuführen, die durch ein proprietäres IMAP-Anwendungsmodul (33) extrahiert wurden, wobei Daten mit mindestens einem Speicherserver (4, 5) über ein Netz ausgetauscht werden, um Antwortdaten des proprietären Protokolls zu erhalten, wobei der Teilschritt die folgenden Arbeitsgänge umfasst:
Erhalten (2210) von zu verkapselnden Daten und Daten von Mitteilungsattributen (500) von mindestens einem Speicherserver (4, 5), wobei diese Daten der E-Mail-ID (310) zugeordnet sind, und
Generieren (2230) der E-Mail auf der Grundlage der zu verkapselnden Daten und der Daten von Mitteilungsattributen, und
einen dritten Teilschritt (2300), der durch das Analysemodul (36) durchgeführt wird und darin besteht, auf der Grundlage der Antwortdaten des proprietären Protokolls einen Antwort-IMAP-Datenstrom zu generieren, und der die Übertragung der E-Mail an den Remoteclient (1, 1') umfasst,
wobei das proprietäre IMAP-Anwendungsmodul ausgewählt wird aus einem ersten und einem zweiten proprietären IMAP-Anwendungsmodul (33), wobei das erste proprietäre IMAP-Anwendungsmodul dazu ausgelegt ist, Aufgaben bezüglich des ersten proprietären IMAP-Protokolls auszuführen, und das zweite proprietäre IMAP-Anwendungsmodul dazu ausgelegt ist, Aufgaben bezüglich des zweiten proprietären IMAP-Protokolls auszuführen.

2. Verfahren nach Anspruch 1, bei dem das proprietäre IMAP-Anwendungsmodul (33) entsprechend den dem Remoteclient (1, 1') zugeordneten Informationen technischer Merkmale (200) aus dem ersten und dem zweiten proprietären IMAP-Anwendungsmodul ausgewählt wird.

3. Verfahren nach Anspruch 1 oder 2, bei dem das Analysemodul (36) Daten mit mindestens einem Speicherserver (4) über ein Netz austauscht, wobei das Verfahren ferner einen Authentisierungsschritt (100) umfasst, der vor dem Übersetzungsschritt ausgeführt wird und aufweist:
einen Teilschritt der Identifikation (1100) des Remoteclient durch den E-Mail-Server und
einen Teilschritt der Wiederherstellung (1200) von Informationen technischer Merkmale (200), die dem Remoteclient zugeordnet sind, auf dem E-Mail-Server (3) von einem Speicherserver (4).

4. Verfahren nach einem der Ansprüche 1 bis 3, **dadurch gekennzeichnet, dass** der Arbeitsgang des Erhaltens (2200) von zu verkapselnden Daten (500) und Daten von Mitteilungsattributen (500) von mindestens einem Speicherserver (4) die Aktualisierung (2220) der Daten auf dem Speicherserver (4) umfasst.

5. Verfahren nach einem der Ansprüche 1 bis 4, **dadurch gekennzeichnet, dass** der Arbeitsgang des Generierens der E-Mail (2300) und/oder der Arbeitsgang des Erhaltens (2200) von zu verkapselnden Daten und Daten von Mitteilungsattributen von mindestens einem Speicherserver (4) entsprechend den Informationen technischer Merkmale (200) durchgeführt wird.

6. Verfahren nach einem der Ansprüche 1 bis 5, **dadurch gekennzeichnet, dass** die zu verkapselnden Daten (500) Daten umfassen, die aus einer Liste ausgewählt werden, die eine Sprachnachricht, eine audiovisuelle Nachricht, ein Bild, einen Film, eine Tonaufzeichnung, ein Telefax, ein digitalisiertes Dokument, eine Ereignisbenachrichtigung umfasst.

7. Verfahren nach einem der Ansprüche 3 bis 6, **dadurch gekennzeichnet, dass** der Speicherserver (4) für den Remoteclient (1, 1') und über das Internet-Netz (2) nur über den E-Mail-Server (3) zugänglich ist.

8. E-Mail-Server (3) zur Verarbeitung von mindestens zwei IMAP-Datenströmen, wobei die IMAP-Datenströme über ein Internet-Netz (2) mit mindestens zwei Remoteclients (1, 1') ausgetauscht werden, die jeweils ein erstes und ein zweites anderes proprietäres IMAP-Protokoll verwenden, wobei jeder IMAP-Datenstrom jeweils einer Verbindung eines jeweiligen Remoteclient zu einer elektronischen Mailbox entspricht, wobei der E-Mail-Server **dadurch gekennzeichnet ist, dass** er umfasst:
ein Analysemodul (36) zur Durchführung eines Teilschritts, der darin besteht, Daten des proprietären Protokolls aus einem IMAP-Datenstrom zu extrahieren (2100), und die Extraktion einer Anforderung der Zustellung einer durch eine E-Mail-ID identifizierten E-Mail umfasst, und eines Teilschritts, der darin besteht, auf der Grundlage der Antwortdaten des proprietären Protokolls einen Antwort-IMAP-Datenstrom zu generieren (2300), und die Übertragung der E-Mail an den Remoteclient (1, 1') umfasst, und
mindestens ein erstes und ein zweites proprietäres IMAP-Anwendungsmodul (33), wobei das erste proprietäre IMAP-Anwendungsmodul dazu ausgelegt ist, Aufgaben bezüglich des ersten proprietären IMAP-Protokolls auszuführen, und das zweite proprietäre IMAP-Anwendungsmodul dazu ausgelegt ist, Aufgaben bezüglich des zweiten proprietären IMAP-Protokolls auszuführen,
wobei die proprietären IMAP-Anwendungsmodule (33) Daten mit mindestens einem Speicherserver (4) über ein Netz austauschen und dazu ausgelegt sind, einen Teilschritt durchzuführen, der darin besteht, mindestens eine Aufgabe bezüglich der extrahierten Daten des proprietären Protokolls auszuführen (2200), um Antwortdaten des proprietären Protokolls zu erhalten, wobei der Teilschritt die folgenden Arbeitsgänge umfasst:
Erhalten (2210) von zu verkapselnden Daten und Daten von Mitteilungsattributen von mindestens einem Speicherserver, wobei diese Daten der E-Mail-ID zugeordnet sind, und
Generieren (2230) der E-Mail auf der Grundlage der zu verkapselnden Daten und der Daten von Mitteilungsattributen.

9. Computerprogrammprodukt, umfassend Anweisungen, die geeignet sind, bei einer Ausführung dieses Programms durch einen Prozessor eines E-Mail-Servers die Schritte eines Verfahrens nach einem der Ansprüche 1 bis 7 umzusetzen.

## Claims

1. Method for processing at least two IMAP data flows, the IMAP data flows being exchanged via an internet network between an electronic mail server and at least two remote clients (1, 1') respectively using a first and a second separate proprietary IMAP protocol, each IMAP data flow respectively corresponding to a connection of a respective remote client to an electronic mailbox, the method being **characterized in that** it comprises a translation step (2000) including:
a first sub-step (2100) carried out by an analysis module (36), consisting of the extraction of proprietary protocol data from an IMAP data flow and comprising the extraction of a request to deliver an electronic mail identified by an electronic mail identifier (310),
a second sub-step (2200) consisting of the execution of at least one task relating to the extracted proprietary protocol data by a proprietary IMAP application module (33) exchanging data with at least one storage server (4, 5) via a network in order to obtain proprietary protocol response data, said sub-step including the operations of:
obtaining (2210) data to be encapsulated and message attribute data from at least one storage server (4, 5), said data being associated with the electronic mail identifier (310), and
generating (2230) the electronic mail from the data to be encapsulated and the message attribute data, and
a third sub-step (2300) carried out by the analysis module (36), consisting of the generation of a return IMAP data flow from the proprietary protocol response data and comprising the transmission of said electronic mail to the remote client (1, 1'),
said proprietary IMAP application module being selected from among a first and a second proprietary IMAP application module (33), the first proprietary IMAP application module being adapted to execute tasks relating to the first proprietary IMAP protocol, the second proprietary IMAP application module being adapted to execute tasks relating to the second proprietary IMAP protocol.

2. Method according to claim 1, wherein the proprietary IMAP application module (33) is selected from among the first and second proprietary IMAP application modules on the basis of technical specifications information (200) associated with the remote client (1, 1').

3. Method according to claim 1 or 2, wherein the analysis module (36) exchanges data with at least one storage server (4) via a network, the method further comprising an authentication step (100) performed before the translation step and comprising:
a sub-step of identification (1100) of the remote client by the electronic mail server, and
a sub-step of retrieval (1200) on the electronic mail server (3), from a storage server (4), technical specifications information (200) associated with the remote client.

4. Method according to anyone of claims 1 to 3, wherein the operation of obtaining (2200) data to be encapsulated (500) and message attribute data from at least one storage server (4) comprises the updating (2220) of said data on the storage server (4).

5. Method according to any one of claims 1 to 4, wherein the operation of generating the electronic mail (2300) and/or the operation of obtaining (2200) data to be encapsulated and message attribute data from at least one storage server (4), is carried out based on the technical specifications information (200).

6. Method according to any one of claims 1 to 5, wherein the data to be encapsulated (500) contain data selected from a list comprising: a voicemail message, a visual voicemail message, an image, a video, a sound recording, a fax, a scanned document, an event notification.

7. Method according to any one of claims 3 to 6, wherein the storage server (4) is accessible, by the remote client (1, 1') and via the internet network (2), solely through the electronic mail server (3).

8. Electronic email server (3) for processing at least two IMAP data flows, the IMAP data flows being exchanged via an internet network (2) with at least two remote clients (1, 1') respectively using a first and a second separate proprietary IMAP protocol, each IMAP data flow respectively corresponding to a connection of a respective remote client to an electronic mailbox, the electronic mail server comprising:
an analysis module (36) for carrying out a sub-step consisting of the extraction (2100) of proprietary protocol data from an IMAP data flow and comprising the extraction of a request to deliver an electronic mail identified by an electronic mail identifier, and a sub-step consisting of the generation (2300) of a return IMAP data flow from proprietary protocol response data and comprising the transmission of said electronic mail to the remote client (1, 1'), and
at least a first and a second proprietary IMAP application module (33), the first proprietary IMAP application module being adapted to execute tasks relating to the first proprietary IMAP protocol, the second proprietary IMAP application module being adapted to execute tasks relating to the second proprietary IMAP protocol,
said proprietary IMAP application modules (33) exchanging data with at least one storage server (4) via a network and being adapted to carry out a sub-step consisting of the execution of at least one task relating to the extracted proprietary protocol data (2200) in order to obtain proprietary protocol response data, said sub-step including the operations of:
obtaining (2210) data to be encapsulated and message attribute data from at least one storage server, said data being associated with the electronic mail identifier, and
generating (2230) the electronic mail from the data to be encapsulated and the message attribute data.

9. Computer program product comprising instructions suitable for implementing, when this program is executed by a processor of an electronic mail server, the steps of a method according to any one of claims 1 to 7.
